# EUROPEAN PATENT SPECIFICATION

(11) **EP 2 915 059 B1**
(45) Date of publication and mention of the grant of the patent: **26.05.2021**
(21) Application number: 12887772.7
(22) Date of filing: 30.10.2012
(51) Int. Cl.: G06F 17/00, G06F 9/44, G06F 11/30, G06F 11/32, G06F 11/34, H04L 12/26, G06K 9/00

(54) **ANALYZING DATA WITH COMPUTER VISION**
ANALYSE VON DATEN MIT COMPUTERANZEIGE
ANALYSE DE DONNÉES À L'AIDE D'UNE VISION INFORMATIQUE

(43) Date of publication of application: 09.09.2015
(73) Proprietor: Ent. Services Development Corporation LP, Houston, TX 77070 (US)
(72) Inventor: CHO, John, Herndon Virginia 20171 (US)
(74) Representative: Prock, Thomas
(86) International application number: PCT/US2012/062601
(87) International publication number: WO 2014/070147

(56) References cited:
- EP-A2- 2 402 876
- JP-A- H05 174 150
- KR-A- 20030 041 612
- KR-A- 20040 054 941
- KR-A- 20100 132 911
- US-A1- 2004 090 439
- US-A1- 2012 110 460
- US-A1- 2012 223 963
- US-A1- 2012 272 186

## Description

### BACKGROUND

Information technology systems, such as networks, may include hundreds or thousands of physical and virtual machines and peripheral devices that are in communication with one another. A virtual machine may be a program implementation of a physical component of a network that is hosted on at least one physical machine. Often, the virtual machine's hosts are switched to meet resource distribution needs. Also, running an application on the network can utilize multiple network resources. Thus, the network resources are highly interconnected with one another.
JPH05174150 describes a method of identifying a circular graph and extracting data items from the graph.
US 2012/110460 describes methods and systems for monitoring network performance.
US 2004/090439 describes a system and method for recognizing and interpreting diagrammatic and graphical representations in a computer.
EP 2 402 876 relates to methods and apparatus for correlating simulation models with physical devices based on correlation metrics.
KR 2003 0041612 describes a method for analyzing a server bottleneck in real time.

The invention is defined by the features laid down in the independent claims 1, 10 and 11. Further enhancements are provided by the dependent claims.

### BRIEF DESCRIPTION OF THE DRAWINGS

The accompanying drawings illustrate various examples of the principles described herein and are a part of the specification. The illustrated examples are merely examples and do not limit the scope of the claims.
Fig. 1 is a diagram of an example of creating a pictograph according to principles described herein.
Fig. 2 is a diagram of an example of a pictograph according to principles described herein.
Fig. 3 is a diagram of an example of creating a correlated pictograph according to principles described herein.
Fig. 4 is a diagram of an example of a correlated pictograph according to principles described herein.
Fig. 5 is a diagram of an example of creating a baseline pictograph stack according to principles described herein.
Fig. 6 is a diagram of an example of a baseline pictograph stack according to principles described herein.
Fig. 7 is a diagram of an example of comparing a baseline pictograph stack with a real time pictograph according to principles described herein.
Fig. 8 is a diagram of an example of comparing a baseline pictograph against a real time pictograph with computer vision according to principles described herein.
Fig. 9 is a diagram of an example of a pictograph according to principles described herein.
Fig. 10 is a diagram of an example of a pictograph according to principles described herein.
Fig. 11 is a diagram of an example of a method for analyzing data with computer vision according to principles described herein.
Fig. 12 is a diagram of an example of a processor according to principles described herein.
Fig. 13 is a diagram of an example of a method for analyzing data with computer vision according to principles described herein.
Fig. 14 is a diagram of an example of a flowchart of a process for analyzing data with computer vision according to principles described herein.

### DETAILED DESCRIPTION

Issues in information technology systems may arise from any number of components. Due to the complex interplay of hardware and software components in information technology systems, when one component exhibits a characteristic outside of acceptable operating parameters, multiple downstream symptoms may occur in the network. Treating the symptoms of network issues will not resolve the issues because they are not the issue's root cause. Understanding the relationship between the issue's symptoms and the root cause may reduce the time to resolve the system's issues. In some cases, multiple conditions in the network may collectively be the issue's root cause even though each condition separately may be within acceptable operating parameters. Discovering these relationships among operating parameters may be challenging to discover because of the system's complexity.

The principles described herein include a method for analyzing data with computer vision. Such a method may include creating pictographs that have symbols that schematically represent metrics about a system, taking measurements of the symbols of the pictographs with computer vision, and determining differences about the metrics based on the measurements. The method may also include measuring and gathering the data about the system as well as detecting events and relationships among the metrics.

Such a method discovers relationships among the system's complex operating conditions that lead to identifying issues and also discovering their root causes. While examples of the method are described below with specific reference to information technology systems, any system, especially complex systems, may be used according to the principles described herein. For example, the system may be information technology systems, human health systems, social network systems, corporate systems, ecological systems, environmental systems, political systems, economic systems, monetary systems, information systems, other systems, or combinations thereof.

In the following description, for purposes of explanation, numerous specific details are set forth in order to provide a thorough understanding of the present systems and methods. It will be apparent, however, to one skilled in the art that the present apparatus, systems, and methods may be practiced without these specific details. Reference in the specification to "an example" or similar language means that a particular feature, structure, or characteristic described is included in at least that one example, but not necessarily in other examples.

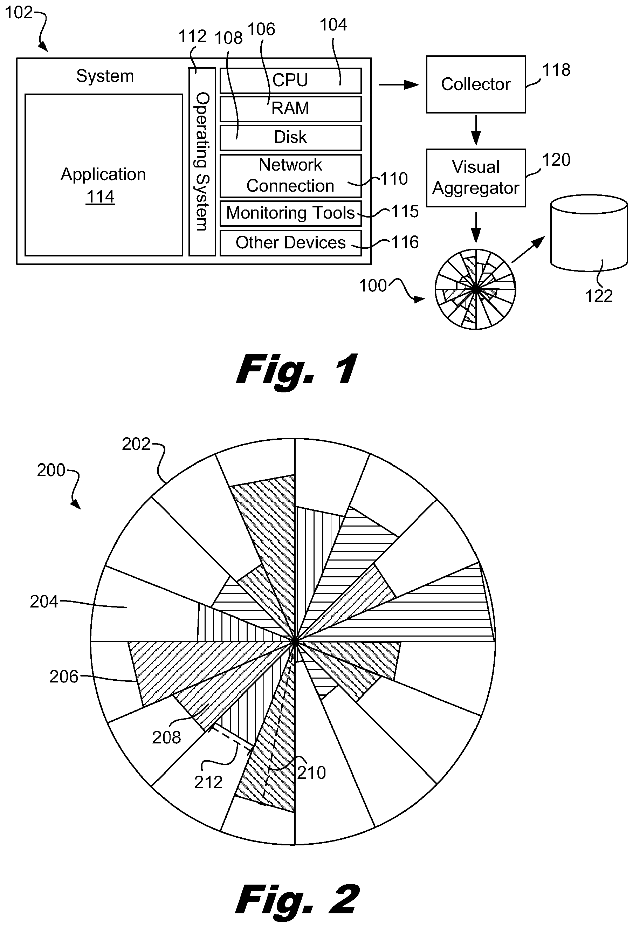

Fig. 1 is a diagram of an example of creating a pictograph (100) according to principles described herein. In this example, a system (102) has several components, including a central processing unit (CPU) (104), random access memory (RAM) (106), a disk (108), a network connection (110), an operating system (112), an application (114), monitoring tools (115), and other devices (116). While the example of Fig. 1 has been depicted with reference to specific system components, any group of components or arrangement of components may be used according to the principles described herein. Metrics about each of these components are collected with monitoring tools (115) and the raw data are sent to a collector (118). In some examples, the metrics are gathered through multiple sources.

A visual aggregator (120) is used to create the pictograph (100) that has symbols that schematically represent the system's raw data, and the pictograph (100) are stored in a database (122) with the raw data. In some examples, the visual aggregator (120) organizes the data into a two dimensional format.

Any metric about the system (102) may be gathered and visually depicted in the pictograph (100). In some examples, the metrics that are collected include environmental metrics, input/output metrics, memory metrics, network metrics, processing metrics, other metrics, or combinations thereof. The environmental metrics may include the temperatures and/or voltages of the CPU (104), the disk (108), a field programmable gate array, a graphics processing unit, a system board, a monitoring tool, another component, or combinations thereof.

The input/output response metrics may include parameters about messages and/or transactions made with the network components, such as the size of the transaction or message, the transaction time, and the types of transactions. These metrics can be associated with external data input that is loaded into the application (114), such as data feeds or read files. These metrics may also be associated with the external data output that is produced by the application (114), such as log files and output files. In examples where the application has concurrent users, the input/output response metrics may include user-initiated transaction types and response times.

Metrics that are associated with memory may include cache misses, disk read times, disk write times, paging, other memory metrics, or combinations thereof. These metrics may be from different memory units of the system (102) or its subsystems, such as registers, L1 caches, L2 caches, main memory, disks, or memory units, or combinations thereof. These metrics may also include tracing selected objects that reside in the memory, such as java probes.

The network metrics may include those metrics that are associated with a network subsystem as it relates to the application (114). These metrics may include the type of network connections established, the number of network connections established, and packet collisions.

The processing metrics may include metrics that are related to program counters. The program counters may allow the tracing of processing related events, such as application startup/shutdown, context switching, floating point operations, spinlocks, system interrupts, threads, other processing related events, or combinations thereof.

Fig. 2 is a diagram of an example of a pictograph (200) according to principles described herein. In this example, the pictograph (200) has a circular shape (202) with multiple pie segments (204). Each pie segment (204) is a field that displays symbols (206) that fill a portion of the field. The size, color (208), length (210), width (212), other symbol dimensions, or combinations thereof may schematically represent a parameter of a measured metric of the system.

The data gathered with the collectors is aggregated into the pictograph (200) to provide unique identifiers of the various conditions of the system at a specific moment in time. Each pie segment (204) is dedicated to a specific metric or characteristic of group metrics. In some examples, the length (210) of the symbol (206) in the pie segment (204) schematically represents a magnitude of the metric while the symbols' color (208) designates those metrics that have a probability of having a mathematical relationship to each other. Metadata may be associated with each of the pie segments (204). Other features that can be measured with computer vision include width, position, texture, line weight, outline, other features, or combinations thereof. The metadata allows for quick retrieval from the database.

While the example of Fig. 2 describes a pictograph with reference to a specific shape and style, any type of pictograph that represents the system's metrics may be used. For example, other types of pictographs compatible with the principles described herein include pie charts, bar graphs, line graphs, histograms, timelines, tree charts, flowcharts, area charts, cartograms, pedigree charts, bubble charts, tree maps, waterfall charts, radar charts, stream graphs, other pictograph types, or combinations thereof.

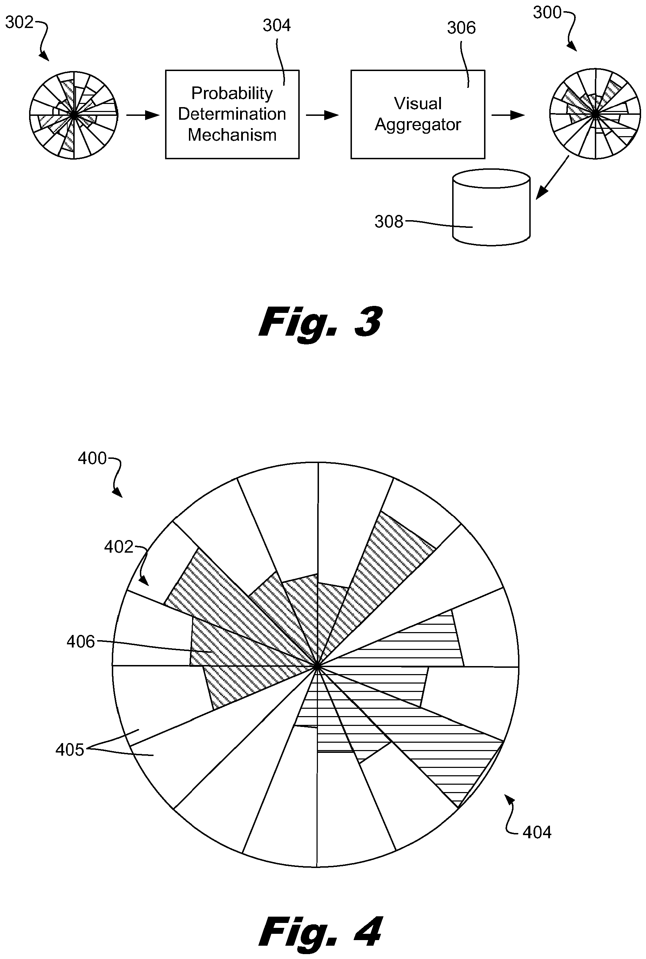

Fig. 3 is a diagram of an example of creating a correlated pictograph (300) according to principles described herein. In this example, a raw data pictograph (302) is analyzed with a probability determination mechanism (304) that determines which of the metrics displayed in the raw data pictograph (302) have relational significance. In some examples, the relational significance is a mathematical relationship among at least two metrics. The relational significance may be positive relationships, negative relationships, reciprocal relationships, exponential relationships, derivatives, other types of relationships, or combinations thereof. To have relational significance, the metrics in question are related enough to each other to exceed a probability relationship threshold. The probability relationship threshold is determined based on user input, a relational significance policy, other factors, or combinations thereof.

The probability determination mechanism (304) analyzes the raw data pictographs (302) at a single point in time, analyzes the metrics over time across multiple pictographs, or combinations thereof. If the probability determination mechanism determines that a subset of the metrics are likely to change in relation to one another, the visual aggregator (306) creates a correlated pictograph (300) that includes the subset of metrics deemed likely to have a relationship. Thus, the correlated pictograph (300) has a subset of the metrics that are represented in the raw data pictograph (302). The correlated pictographs (300) are stored in a database (308). The database (308) may store the system's raw data and raw data pictographs together.

The probability determination mechanism (304) may be a statistics model, a Hidden Markov Model, an inference engine, a neural network mechanism, other probability determination mechanisms, or combinations thereof. In some examples, several subsets of metrics are considered to have relational significance. Thus, several sets of the correlated pictographs (302) are created. In some examples, the subset of metrics includes two metrics. In other examples, the subset includes three or more metrics that have relational significance.

Fig. 4 is a diagram of an example of a correlated pictograph (400) according to principles described herein. In this example, the correlated pictograph (400) includes a first metric type (402) and a second metric type (404), which are just the metrics included in the subset that have relational significance. Each of the metrics is schematically represented with symbols in pie segments (405) with a different symbol color, texture, position, length, width, line weight, other feature, or combinations thereof. The metrics are grouped together by color (406) to represent those metrics that have a relational significance to each other. The correlated pictograph (400) represents the subset of metrics at a specific moment in time. While the example of Fig. 4 depicts a correlated pictograph (400) with a specific number of metrics in the subset, any number of metrics may be included in the subset.

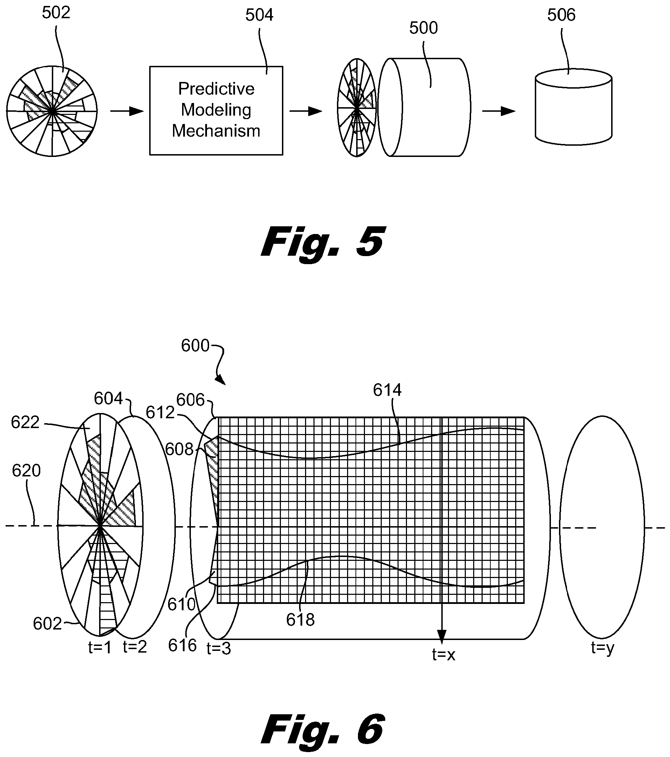

Fig. 5 is a diagram of an example of creating a baseline pictograph stack (500) according to principles described herein. In this example, correlated pictographs (502) are analyzed with a predictive modeling mechanism (504). The predictive modeling mechanism (504) analyzes the selected correlated pictographs to determine the mathematical relationship of the metrics in the subset from the provided correlated pictographs (502). The predictive modeling mechanism includes determining coordinates of the correlated pictographs with computer vision.

Gathering the coordinates of the pictograph's symbols with computer vision yields a more precise coordinate measurement for each of the pictographs than possible with a human eye. Thus, the mathematical relationships identified with computer vision are highly accurate and give more reliability to the predictive modeling mechanism's ability.

Computer vision may include gathering a digital image of the pictograph with at least one image sensor. Any image sensor compatible with the principals described herein may be used. A non-exhaustive list of image sensors may include time of flight sensors, range sensors, tomography devices, radar devices, ultrasonic cameras, light sensitive cameras, machine vision devices, image processing devices, other device, or combinations thereof. In some examples, several computer vision measurements are taken of each pictograph to ensure accuracy. The pictograph features, such as the length, width, color, orientation, position or other features, may be extracted from the pictograph for analysis. In some examples, the pictographs are computer generated images that are measured with a processor.

Based on the mathematical relationship defined by the predictive modeling mechanism, a stack of correlated pictographs is created. Each pictograph in the stack schematically represents a unit of time. Additional correlated pictographs are created that follow the mathematical relationship and schematically represent units of time not earlier provided. Thus, the predictive modeling mechanism (504) fills in the gaps for those time units not provided based on the mathematical relationship.

The stack of correlated pictographs (502) is a baseline pictograph stack (500) that indicates how the metrics in the subset relate to each other during acceptable operating conditions. Pictographs of real time data are compared to this baseline pictograph stack (500) to determine when issues in the system exist.

The baseline pictograph stack (500) is stored in a database (506). In some examples, the database (506) also stores the system's raw data and raw data pictographs. In some examples, samples of the system are taken over time, and the raw data associated with the system is updated. As the raw data is updated, the baseline pictograph stack (500) is also updated to reflect the changes.

In some examples, multiple baseline pictograph stacks (500) are created, and each baseline pictograph stack (500) schematically represents a different mathematical relationship. In other examples, multiple mathematical relationships are schematically depicted in a single baseline pictograph stack (500).

Fig. 6 is a diagram of an example of a baseline pictograph stack (600) according to principles described herein. In this example, a first correlated pictograph (602) schematically represents a first time unit, and a second correlated pictograph (604) schematically represents a second time unit. In the example of Fig. 6, a third correlated pictograph (606) is illustrated with just a first symbol (608) and a second symbol (610) of the metrics displayed.

At a first end (612) of the first symbol (608), a first graph line (614) starts, and at a second end (616) of the second symbol (610), a second graph line (618) starts. The graph lines (614, 618) schematically represent the ends (612, 616) of the first and second symbols (608, 610) of each of the correlated pictographs in the baseline pictograph stack (600). For example, on a correlated pictograph at time (x), the ends (612, 616) of the first and second symbols (608, 610) correlate with the location of the first and second graph lines (614, 618).

In the example of Fig. 6, the graph lines (614, 618) move in relation to one another. Since the first and second symbols (608, 610) are extending away from a central axis (620) of the baseline pictograph stack (600), the magnitudes of the metrics schematically represented with graph lines (614, 618) are moving in opposing directions even though the metrics schematically represented with graph lines (614, 618) have a positive relationship with one another. Thus, as the magnitude of the first metric schematically represented with the first graph line (614) increases, so does the metric schematically represented with the second graph line (618). In such an example, if a real time pictograph stack is compared to the baseline pictograph stack (600) and the real time data pictograph stack exhibits a characteristic where the first and second metrics have magnitudes that move in opposing directions, this difference may indicate that there is a real time issue in the system.

In some examples, the pictographs schematically represent the relational significance among two or more metrics in a three dimensional manner. After the baseline pictograph stack (600) is created, computer vision may be used to look down the stack's central axis (620) and see the relationships between the metrics. In such examples, the pictograph's features, such as the symbols (608, 610) and the pictograph area (622) without symbols may have at least some amount of computer vision transparency such that computer vision may understand each of the metrics from each of the pictographs in the stack. In some examples, computer vision transparency includes an optical transparency, an infrared transparency, a visual light transparency, an ultrasonic transparency, an auditory transparency, other forms of transparency, or combinations thereof. The computer vision may be used to locate symbols, edges, contrasts, density, color, pixel position, image segmentation, other features of the pictographs, or combinations thereof. Further, in some examples, individual pictographs from the stack are extracted for analysis and/or for comparison with a real time pictograph.

In the example of Fig. 6, each correlated pictograph in the stack has a circular shape. In some example, the ends (612, 616) of the pictograph's symbols (608, 610) form the outer edge of the pictograph. In such examples, the computer vision may analyze the pictograph stack with computer vision from the side or another angle other than straight down the stack's central axis. Further, in other examples where the area (622) of the individual correlated pictographs without symbols has at least a degree of computer vision transparency, computer vision may also determine the characteristics of the baseline pictograph stack (600) and/or each of the correlated pictographs in the stack (600) from the side or a direction other than down the stack's central axis (620).

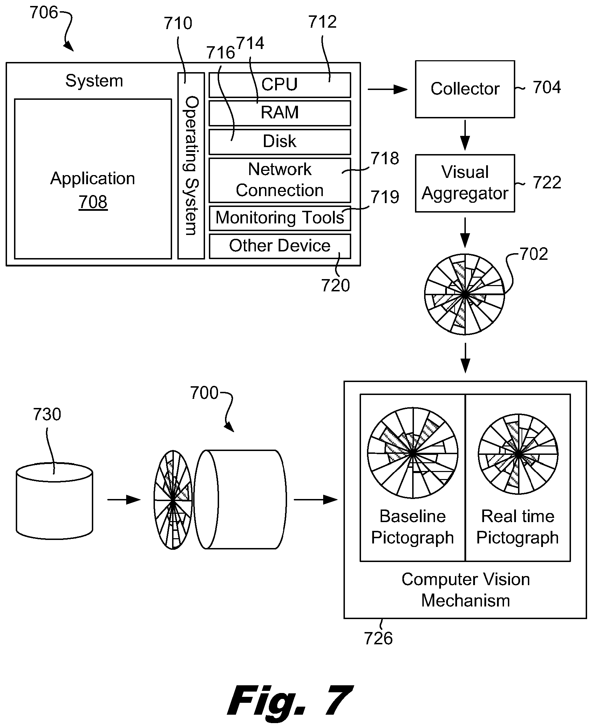

Fig. 7 is a diagram of an example of comparing a pictograph from the baseline stack (700) with a real time pictograph (702) according to principles described herein. In this example, a collector (704) gathers real time information about each of the components of the system (706) through monitoring tools. In some examples, the metrics gathered about the system (706) are from different sources. In the example of Fig. 7, the components include an application (708), an operating system (710), a central processing unit (CPU) (712), random access memory (RAM) (714), a disk (716), a network connection (718), monitoring tools (719), and other devices (720).

A visual aggregator (722) compiles the collected metrics and creates at least one real time pictograph (702). In some examples, the real time pictographs are compiled to form a real time pictograph stack. In other examples, the metrics are compiled into some pictographs which schematically represent the metrics at selected times. Further, the collected metrics may include all of the metrics that the collector is capable of collecting. However, the real time pictographs may include just selected metrics. For example, the selected metrics may be just those metrics that were deemed to have relational significance.

The real time pictographs (702) are sent to a computer vision mechanism (726). Also, a baseline pictograph stack (700) may also be retrieved from the database (730) and sent to the computer vision mechanism (726). The computer vision mechanism (726) compares the baseline pictograph stack (700) to the real time pictographs (702) to determine whether the real time operating conditions of the system (706) are within acceptable operating parameters. The computer vision mechanism (726) overlays an individual pictograph from the baseline pictograph stack (700) with a real time pictograph (702) that schematically represents the metrics with the same moment in time as the selected baseline pictograph. In other examples, the computer vision mechanism (726) analyzes the baseline pictograph stack (700) from the side to determine the acceptable real time parameters. In yet other examples, a real time pictograph stack (700) is analyzed with computer vision from an angle other than down the central axis and compared to measurements taken of the baseline pictograph stack (700) at the same angles.

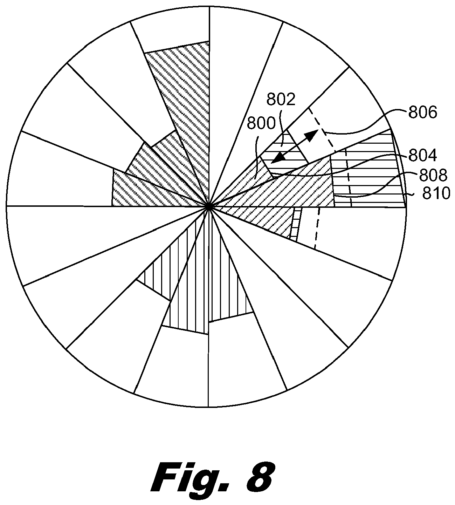

Fig. 8 is a diagram of an example of comparing a baseline pictograph (800) against a real time pictograph (802) with computer vision according to principles described herein. In this example, the real time pictograph (802) is overlain with the baseline pictograph (800). A minimum error threshold (804) and a maximum error threshold (806) are previously determined with the predictive modeling mechanism for each metric at each unit of time. The computer vision records an accurate measurement of where the ends (808, 810) of each metric of interest is located within the real time pictograph (802) to determine whether the real time metrics are within the minimum and maximum error thresholds (804, 806). In the example of Fig. 8, the metrics of the real time pictograph (802) appear to be within the acceptable threshold ranges, thus, these metrics do not indicate that there is an issue with the system.

In some examples, the baseline measurements are taken in a variety of situations. For example, the baseline measurements are taken while the system is idle, processing specific types of requests, booting up, sending messages, implementing updates, performing routine maintenance, defragmenting, performing other tasks, or combinations thereof. The baseline measurements may incorporate measurements from different sources. Further, the baseline measurements may include an average of multiple measurements and/or removal of outlier measurements. In some examples, manufacturers cause the baseline measurements to be made before the system is sold to a user. In some examples, the baseline measurements are updated whenever an event that could potentially alter the baseline measurement occurs. For example, in response to a new program or piece of hardware being installed into the system, the baseline measurements changes. As the baseline measurements change over time, the gathered metrics are updated, and the baseline pictograph stack is updated or recreated to reflect the changes.

While the example of Fig. 8 is described with reference to a specific way to analyze the pictographs with computer vision, other mechanisms for comparing real time pictographs to baseline pictographs may be used in accordance with the principles described herein. For example, computer vision analyzing techniques may not be limited to viewing overlain pictographs and viewing them from the side. Three dimensional shapes formed by a real time pictograph stack and/or baseline stack may be used for the comparison.

Pictographs with a circular shape and pie segments are well suited to compare complex sets of data. While most data comparison mechanisms strive to simply data, the principles described herein allow data sets to be analyzed while still maintaining their complexity. In such examples, like complex event processing or signal detection, time is saved by reducing simplification processes, but also, the accuracy of the predictions is increased. For examples where hundreds of metrics are influenced by each other, and therefore, have relational significance, a mechanism accounts for each influencing metric to make determinations about a system's health. Further, the principles described herein may be used to uniquely identify how processes are affected during processing events. Other pictograph formats may also be used and analyzed with computer vision to determine a system's health.

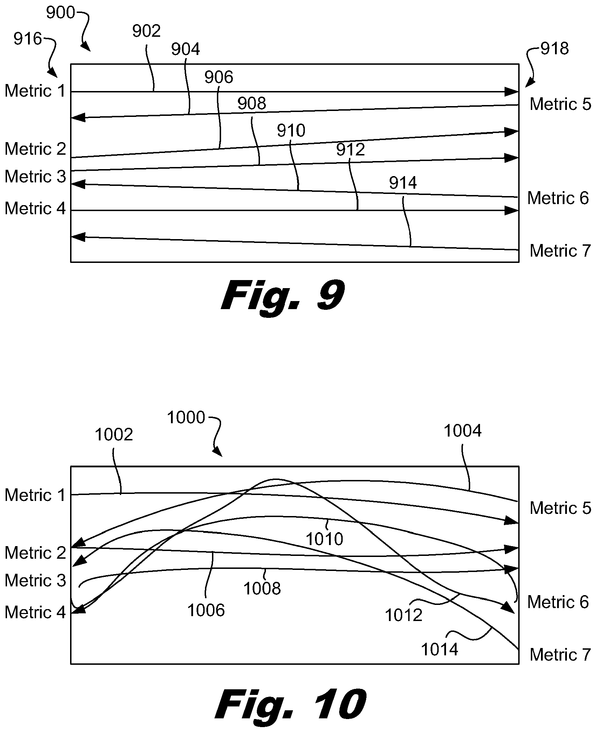

Fig. 9 is a diagram of an example of a pictograph (900) according to principles described herein. In this example, seven metrics are schematically represents with lines (902, 904, 906, 908, 910, 912, 914) in a rectangular pictograph (900). The magnitudes of each metric are determined by the change in elevation between a line starting point (916) and a line ending point (918). In the example of Fig. 9, the pictograph schematically represents metrics of a system during an idling event.

The metrics are aggregated into a single pictograph to display each of the metrics at the same moment in time. Each of the metrics is associated with metadata that allows the metrics to be quickly found with a database search.

Fig. 10 is a diagram of an example of a pictograph (1000) according to principles described herein. In this example, the pictograph schematically represents the system schematically depicted in Fig. 9 during a processing event. In the example of Fig. 10, lines (1002, 1004, 1006, 1008, 1010, 1012, 1014) schematically represent the same metrics as schematically depicted in Fig. 9, but they have a different form that schematically represents the different values for each metric during the processing event. Here, pictograph (900) is overlain with pictograph (1000) and the differences between the metrics are measured using computer vision. The differences may include an area difference between original reference line and the line that is depicted during the processing event. Differences may also be identified in the lines' position, length, thickness, distance, other features, or combinations thereof.

Computer vision may be used to document the changes in each metric throughout an entire processing event of the system. In such an example, the metrics may be gathered at various moments in time during the processing event. Computer vision can distinguish small differences between the lines of the overlain pictographs and allow a predictive modeling mechanism to determine accurate mathematical relationships between the metrics. For those moments of time in between the measured time intervals, the predictive modeling mechanism creates pictographs through interpolation and other forms of predictive modeling to schematically represent those time periods based on the determined mathematical relationships. The predictive modeling mechanism may also determine outliers that were measured in the system. Thus, the predictive modeling mechanism smooths out the curves over time and interpolate the data to create a series of baseline pictographs.

Real time pictographs that contain real time information about the system are overlain with the baseline pictographs to determine whether the real time metrics are within acceptable operating parameters. Computer vision can measure small differences between the real time pictographs and the baseline pictographs for accurate comparisons, which are useful for situations where small differences indicate issues with the system.

Computer vision can determine the state of the system and not just issues. For example, computer vision used according to the principles described herein can determine whether the system is operating under acceptable conditions, degraded conditions, idling conditions, other conditions and events, or combinations thereof. The principles described herein can be used to determine whether the system is operating under acceptable processing conditions, peak processing conditions, stressed processing conditions, other processing conditions, or combinations thereof.

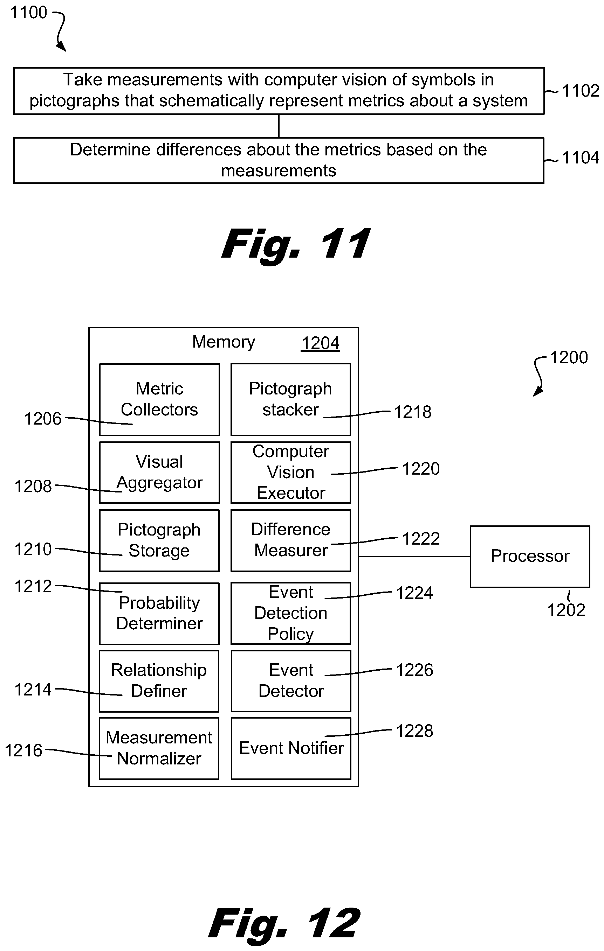

Fig. 11 is a diagram of an example of a method (1100) for analyzing data with computer vision according to principles described herein. In this example, the method (1100) includes taking (1102) measurements with computer vision of symbols in pictographs that schematically represent metrics of the system and determining (1104) differences about the metrics based on the measurements.

The data about the system may be gathered from multiple sources. In some examples, the data is gathered from multiple monitoring tools of the system. The monitoring tools collect different and/or overlapping information about the system. In examples where data about the system is determined to be contradictory, the contradictory data is re-measured. In some examples, a data selection policy governs which data out of the contradictory data is accurate.

In some examples, the method includes making multiple pictographs about the system over time, and the relationships about the metrics are exhibited over time. Such pictographs are stacked together to create a unique signature for each metric over time. The pictographs are ordered in a chronological sequence.

The method may include creating correlated pictographs that display a subset of the metrics. The displayed metrics are metrics that have relational significance, which are based on the metrics exceeding a probability relationship threshold. The metric's probability are determined based on a probability policy that is based on factors such as correlating metric value increases and decreases, time lapse between metric value changes between the metrics, durational consistency of changes in metric values with respect to value changes of other metrics, other factors, or combinations thereof. In some examples, determining whether a relationship between the metrics of a subset exists is determined with a probability determination mechanism. Such probability determination mechanisms may include neural networks, inference engines, statistical models, Hidden Markov Models, other mechanisms, or combinations thereof.

The method may include determining mathematical parameters for those metrics in the subset that exceed the probability relationship threshold by analyzing the correlation pictographs with computer vision. The method may further include creating a baseline stack of correlated pictographs that schematically represent the mathematical parameters of the relationship over time. A predictive modeling mechanism can interpolate metrics not provided about the system between measurements.

In some examples, the method includes comparing the correlated baseline stack to real time data about the system. This includes creating a real time pictograph of the real time data, which may become part of a real time pictograph stack. The real time pictograph is compared to correlated pictographs of the baseline pictograph stack with computer vision. Further, the method may include responding with corrective action to a system issue identified with the computer vision.

Fig. 12 is a diagram of an example of an analysis system (1200) according to principles described herein. In this example, the analysis system (1200) has processor (1202) that is in communication with memory (1204). The memory (1204) represents generally any memory capable of storing data such as program instructions or data structures used by the analysis system. The analysis system (1204) may be in communication with computer vision sensors, other processors, computer readable storage media, the system to be analyzed, monitoring tools, physical devices, virtual devices, other devices, or combinations thereof. The program instructions shown stored in memory (1204) include metric collectors (1206), visual aggregators (1208), pictograph storage (1210), probability determiners (1212), relationship definers (1214), measurement normalizers (1216), pictograph stackers (1218), computer vision executor (1220), difference measurer (1222), event detectors (1226), and event notifiers (1228). The memory (1204) also includes a data structure that contains rules for an event detection policy (1224).

The memory (1204) is a computer readable storage medium that contains computer readable program code to cause tasks to be executed by the processor (1202). The computer readable storage medium may be tangible and/or non-transitory storage medium. A non-exhaustive list of computer readable storage medium types includes non-volatile memory, volatile memory, random access memory, memristor based memory, write only memory, flash memory, electrically erasable program read only memory, or types of memory, or combinations thereof.

The metric collector (1206) represents program instructions that, when executed, cause the processor (1202) to the processor (1200) to collect metric data about a system. The visual aggregator (1208) represents program instructions that, when executed, cause the processor (1202) to analyze the data and create a pictograph to schematically represent the metrics. The pictographs may be stored in a pictograph storage (1210) and be updated as baseline conditions in the system change.

The probability determiner (1212) represents program instructions that, when executed, cause the processor (1202) to analyze the data on the pictographs with computer vision or analyze the raw data about the system. If the probability determiner (1212) identifies that a subset of the data has relational significance, then the relationship definer (1214) is executed. The relationship definer (1214) represents program instructions that, when executed, cause the processor (1202) to analyze the pictographs with computer vision to determine the mathematical relationship/parameters of the metric subset. The measurement normalizer (1216) represents program instructions that, when executed, cause the processor (1202) to normalize the data in the pictographs to reflect the mathematical relationship. In some examples, the normalized pictographs include just metrics that have mathematical relationships. The pictograph stacker (1218) represents program instructions that, when executed, cause the processor (1202) to stack together normalized pictographs to create a baseline pictograph stack.

The computer vision executer (1220) represents program instructions that, when executed, cause the processor (1202) to cause a computer vision sensor to analyze the pictographs to determine relational significance, determine mathematical relationships, compare real time pictographs against the baseline pictograph stack, perform analyzing tasks, or combinations thereof. The difference measurer (1222) represents program instructions that, when executed, cause the processor (1202) to determiners the differences in the measurements taken with the computer vision sensor. The event detector (1224) represents program instructions that, when executed, cause the processor (1202) to determine whether an event occurred based on the measured differences and on an event detection policy (1226). The event detection policy (1226) is a data structure that contains rules and weighted factors to consider when determining the occurrence of an event. The rules and factors may include a minimum error threshold, a maximum error threshold, other factors, or combinations thereof. The rules and factors may also characterize whether an event has a negative impact on the system, like an issue or otherwise where some compensating action is needed. If an event is detected, an event notifier (1228) is executed. The event notifier (1228) represents program instructions that, when executed, cause the processor (1202) to send a message to the appropriate sources that an event occurred. In some examples, automatic corrective or compensating action is taken to address the effects of the event. In other examples, a user takes corrective action to address the event's affects.

Further, the memory (1204) may be part of an installation package. In response to installing the installation package, the programmed instructions of the memory (1204) may be downloaded from the installation package's source, such as an insertable medium, a server, a remote network location, another location, or combinations thereof. Insertable memory media that are compatible with the principles described herein include DVDs, CDs, flash memory, insertable disks, magnetic disks, other forms of insertable memory, or combinations thereof.

In some examples, the processor (1202) and the memory (1204) are located within the same physical component, such as a server, or a network component. The memory may be part of the physical component's main memory, caches, registers, non-volatile memory, or elsewhere in the physical component's memory hierarchy. Alternatively, the memory (1204) may be in communication with the processor (1202) over a network. Further, the data structures, such as the libraries and may be accessed from a remote location over a network connection while the programmed instructions are located locally.

The analysis system (1200) of Fig. 12 may be part of a general purpose computer. However, in alternative examples, the analysis system (1200) is part of an application specific integrated circuit.

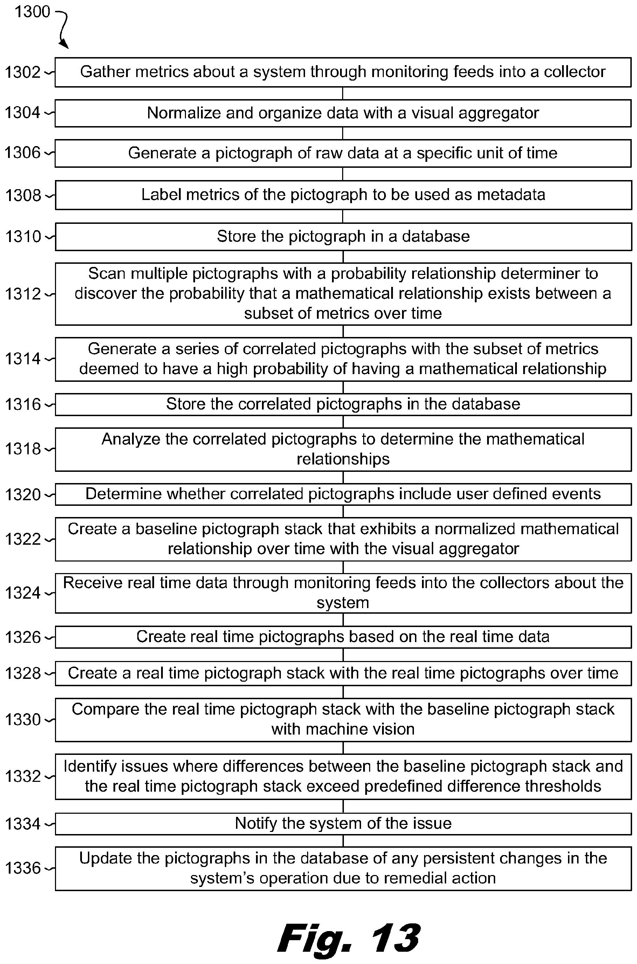

Fig. 13 is a diagram of an example of a method (1300) for analyzing data with computer vision according to principles described herein. In this example, the method (1300) includes gathering (1302) metrics about a system through monitoring feeds into a collector, normalizing (1304) and organizing the raw data with a visual aggregator, and generating (1306) a pictograph of the raw data at a specific unit of time. The method (1300) also includes labeling (1308) the metrics of the pictograph to be used as metadata and storing (1310) the pictograph in a database. Further, the method (1300) includes scanning (1312) multiple pictographs with a probability relationships determiner to discover the probability that is mathematical relationship exists between a subset of metrics of the data over time and generating (1314) a series of correlated pictographs with the subset of metrics deemed to have a high probability of having a mathematical relationship.

In the example of Fig. 13, the method (1300) includes storing (1316) correlated pictographs in the database, analyzing (1318) the correlated pictographs to determine the mathematical relationships, determining (1320) whether the correlated pictographs include user defined events, and creating (1322) a baseline pictograph stack that exhibits a normalized mathematical relationship over time with the visual aggregator. The method (1300) also includes receiving (1324) real time data through monitoring feeds into the collectors about the system and creating (1326) real time pictographs based on the real time data. Further, the method (1300) includes creating (1328) a real time pictograph stack with the real time pictographs over time.

Further, the method (1300) includes comparing (1330) the real time pictograph stack with the baseline pictograph stack with computer vision and identifying (1332) issues where differences between the baseline pictograph stack and the real time pictograph stack exceed predefined difference thresholds. If an issue does exist, the method includes notifying (1334) the system of the issue. The method (1300) includes updating (1336) the pictographs in the database of any persistent changes in the system's operation due to remedial action of the system's issues.

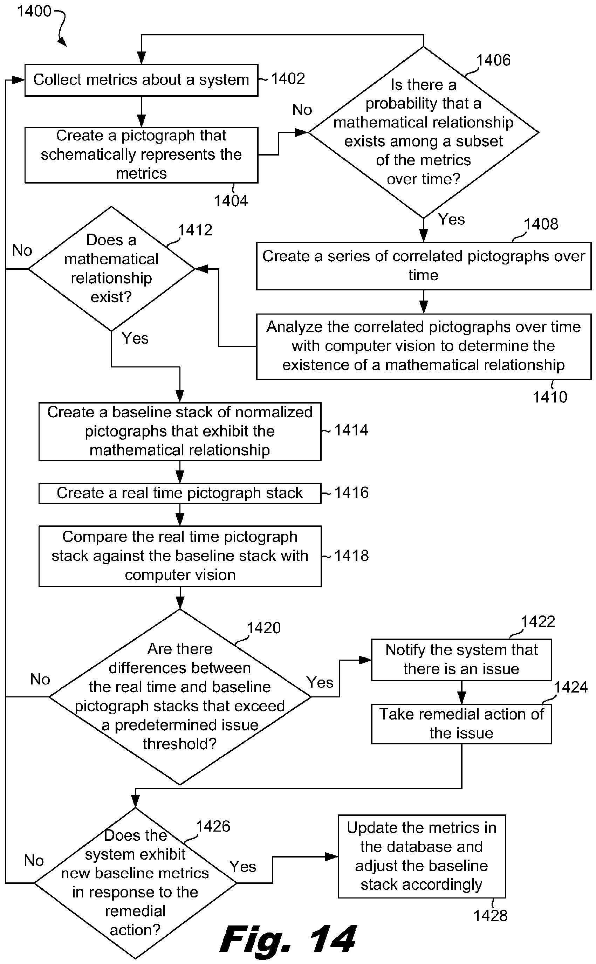

Fig. 14 is a diagram of an example of a flowchart (1400) of a process for analyzing data with computer vision according to principles described herein. In this example, the process includes collecting (1402) metrics about a system and creating (1404) a pictograph that schematically represents the metrics. The process also includes determining (1406) whether there is a probability that a mathematical relationship exists among a subset of the metrics over time. If there is little probability that a relationship exists, the process includes continuing to collect (1402) metrics about the system.

If there is a significant probability that a relationship exists, then the process includes creating (1408) a series of correlated pictographs over time, and analyzing (1410) the correlated pictographs over time with computer vision to determine the existence of mathematical relationships. The process also includes determining (1412) whether a mathematical relationship exists. If no mathematical relationship exists, then the process includes continuing to collect (1402) metrics about the system.

If a mathematical relationship does exist, then the process includes creating (1414) a baseline pictograph stack of normalized pictographs that exhibit the mathematical relationship, creating (1416) a real time pictograph stack, and comparing (1418) the real time pictograph stack against the baseline stack with computer vision. The method also includes determining (1420) whether there are differences between the real time and baseline pictograph stacks that exceed a predetermined issue threshold. If the differences do exceed the threshold, then the process includes notifying (1422) the system that there is an issue and taking (1424) remedial action to address the issue.

The process includes determining (1426) whether the system exhibits new baseline metrics in response to the remedial action. If the system does exhibit new baseline metrics in response to the remedial action, the process may include updating (1428) the metrics in the database and adjusting the baseline stack accordingly.

While the above examples have been described with reference to specific pictograph formats, any pictograph format may be used according to the principles described herein. Also, while the examples above have been described with reference to specific types of computer vision, any type of computer vision compatible with the principles described herein may be used. Further, while the above examples have been described with reference to specific ways to compare the real time data in the pictographs, any comparison mechanism in accordance with the principles described herein may be used.

Also, while the examples above have been described with reference to a specific way to determine the existence of relational significance and mathematical parameters, any mechanisms for determining relational significance and mathematical parameters may be implemented in accordance with the principles described herein. Also, the examples above have been described with reference to computer/information technology systems, however, the principles described herein may be applied to other systems in the social network industries, health care industries, transportation industries, scientific industries, business industries, and government organizations. For example, the principles described herein may be used in the medical industry where metrics about a person's health are monitored. The principles described herein may correlate metrics from a person's blood pressure, medicine type, medicine dosage, sleep hours, blood oxygenation, other factors, and combinations thereof to help identify a person's health or root cause of health issues.

Further, an advantage of using computer vision with the principles described herein is a quick response time. Computer vision is compatible with the goals of determining system issues in real time because computer vision is capable of working in real time.

The preceding description has been presented only to illustrate and describe examples of the principles described. This description is not intended to be exhaustive or to limit these principles to any precise form disclosed. Many modifications and variations are possible in light of the above teaching.

## Claims

1. A device for analyzing data with computer vision, comprising:
a processor (1202) and a memory(1204), said memory (1204) comprising program instructions that, when executed, cause the processor (1202) to:
create a series of correlated pictographs wherein each pictograph in the series of correlated pictographs is generated by:
receiving a plurality of metrics associated with a system (102);
generating a raw data pictograph that schematically represents the plurality of metrics;
identifying from the plurality of metrics at least two metrics that have relational significance, wherein the at least two metrics have relational significance when a mathematical relationship exceeding a probability relationship threshold exists between the at least two metrics; and
creating a correlated pictograph comprising the at least two metrics;
analyse, using computer vision, the series of correlated pictographs (200) to determine a mathematical relationship of the metrics;
create a baseline pictograph stack (500) comprising the series of correlated pictographs based on the mathematical relationship wherein:
each correlated pictograph represents system metrics at a specific moment in time; and
the baseline pictograph stack indicates how the at least two metrics relate to each other during acceptable operating conditions;
obtain a plurality of real time metrics associated with the system (102);
create a real time pictograph that schematically represents the real time metrics associated with said system (102);
compare, using computer vision, said baseline pictograph stack with said real time pictograph to determine whether the real time metrics are within acceptable operating parameters; and
notify the system (102) that there is an issue if the real time metrics are not within acceptable operating parameters.

2. The device of claim 1, wherein said program instructions cause said processor (1202) to compare a correlated pictograph from said baseline pictograph stack against said real time pictograph that represents an identical moment in time as said correlated pictograph.

3. The device of claim 1, wherein said baseline pictograph stack (500) represents a subset of metrics available from a raw data pictograph.

4. The device of claim 1, further comprising determining a health of said system (102) based on differences between said baseline pictograph stack and said real time pictograph.

5. The device of claim 1, wherein the plurality of metrics associated with the system (102) are from different sources about the system (102).

6. The device of claim 1, wherein a probability determination mechanism identifies the at least two metrics that have relational significance.

7. The device of claim 1 further comprising program instructions that, when executed, cause the processor (1202) to respond with remedial action in response to the issue.

8. The device of claim 7 further comprising program instructions that, when executed, cause the processor (1202) to determine whether the system (102) exhibits new baseline metrics in response to the remedial action.

9. The device of claim 8 further comprising program instructions that, when executed, cause the processor (1202) to update the baseline pictograph stack in response to determining that the system (102) does exhibit new baseline metrics in response to the remedial action.

10. A computer program product for analyzing data with computer vision, comprising:
a tangible computer readable storage medium (1204), said tangible computer readable storage medium (1204) comprising computer readable program code embodied therewith, said computer readable program code comprising code that, when executed causes a processor (1202) to:
create a series of correlated pictographs wherein each pictograph in the series of correlated pictographs is generated by:
receiving a plurality of metrics associated with a system (102);
generating a raw data pictograph that schematically represents the plurality of metrics;
identifying from the plurality of metrics at least two metrics that have relational significance, wherein the at least two metrics have relational significance when a mathematical relationship exceeding a probability relationship threshold exists between the at least two metrics; and
creating a correlated pictograph comprising the at least two metrics;
analyze, using computer vision, the series of correlated pictographs to determine a mathematical relationship of the metrics;
create a baseline pictograph stack comprising the series of correlated pictographs based on the mathematical relationship wherein:
each correlated pictograph represents system metrics at a specific moment in time; and
the baseline pictograph stack indicates how the at least two metrics relate to each other during acceptable operating conditions;
obtain a plurality of real time metrics associated with the system (102);
create a real time pictograph that schematically represents the real time metrics associated with said system (102);
compare, using computer vision, said baseline pictograph stack with said real time pictograph to determine whether the real time metrics are within acceptable operating parameters; and
notify the system (102) that there is an issue if the real time metrics are not within acceptable operating parameters..

11. A computer-implemented method for analyzing data with computer vision, comprising:
creating a series of correlated pictographs wherein each pictograph in the series of correlated pictographs is generated by:
receiving a plurality of metrics associated with a system (102);
generating a raw data pictograph that schematically represents the plurality of metrics;
identifying from the plurality of metrics at least two metrics that have relational significance, wherein the at least two metrics have relational significance when a mathematical relationship exceeding a probability relationship threshold exists between the at least two metrics; and
creating a correlated pictograph comprising the at least two metrics;
analyzing, using computer vision, the series of correlated pictographs (200) to determine a mathematical relationship of the metrics;
creating a baseline pictograph stack (500) comprising the series of correlated pictographs based on the mathematical relationship wherein:
each correlated pictograph represents system metrics at a specific moment in time; and
the baseline pictograph stack indicates how the at least two metrics relate to each other during acceptable operating conditions;
obtaining a plurality of real time metrics associated with the system (102);
creating a real time pictograph that schematically represents the real time metrics associated with said system (102);
comparing, using computer vision, said baseline pictograph stack with said real time pictograph to determine whether the real time metrics are within acceptable operating parameters; and
notifying the system (102) that there is an issue if the real time metrics are not within acceptable operating parameters.

## Patentansprüche

1. Vorrichtung zum Analysieren von Daten mit Computeranzeige, Folgendes umfassend:
einen Prozessor (1202) und einen Speicher (1204), wobei der Speicher (1204) Programmanweisungen umfasst, welche, wenn sie ausgeführt werden, den Prozessor (1202) veranlassen zum:
Erzeugen einer Reihe von korrelierten Piktogrammen, wobei jedes Piktogramm in der Reihe von korrelierten Piktogrammen erzeugt wird durch:
Empfangen einer Vielzahl von Metriken, welche einem System (102) zugeordnet ist;
Erzeugen eines Rohdaten-Piktogramms, welches schematisch die Vielzahl von Metriken darstellt;
Identifizieren, aus der Vielzahl von Metriken, mindestens zweier Metriken, welche eine relationale Signifikanz aufweisen, wobei die mindestens zwei Metriken eine relationale Signifikanz aufweisen, wenn eine mathematische Beziehung, welche einen Wahrscheinlichkeitsbeziehungs-Schwellenwert überschreitet, zwischen den mindestens zwei Metriken existiert; und
Erzeugen eines korrelierten Piktogramms, welches die mindestens zwei Metriken umfasst;
Analysieren, unter Verwendung von Computeranzeige, der Reihe von korrelierten Piktogrammen (200) zum Bestimmen einer mathematischen Beziehung der Metriken;
Erzeugen eines Basislinien-Piktogrammstapels (500), welcher die Reihe von korrelierten Piktogrammen basierend auf der mathematischen Beziehung umfasst, wobei:
jedes korrelierte Piktogramm System-Metriken zu einem spezifischen Zeitpunkt darstellt; und
der Basislinien-Piktogrammstapel anzeigt, wie die mindestens zwei Metriken sich aufeinander unter annehmbaren Betriebsbedingungen beziehen;
Erzielen einer Vielzahl von Echtzeit-Metriken, welche dem System (102) zugeordnet ist;
Erzeugen eines Echtzeit-Piktogramms, welches schematisch die Echtzeit-Metriken, welche dem System (102) zugeordnet sind, darstellt;
Vergleichen, unter Verwendung von Computeranzeige, des Basislinien-Piktogrammstapels mit dem Echtzeit-Piktogramm um zu bestimmen, ob die Echtzeit-Metriken innerhalb annehmbarer Betriebsparameter liegen; und
Benachrichtigen des Systems (102), dass ein Problem vorliegt, wenn die Echtzeit-Metriken nicht innerhalb annehmbarer Betriebsparameter liegen.

2. Vorrichtung nach Anspruch 1, wobei die Programmanweisungen den Prozessor (1202) veranlassen, ein korreliertes Piktogramm von dem Basislinien-Piktogrammstapel mit dem Echtzeit-Piktogramm zu vergleichen, welches einen identischen Zeitpunkt wie das korrelierte Piktogramm darstellt.

3. Vorrichtung nach Anspruch 1, wobei der Basislinien-Piktogrammstapel (500) eine Teilmenge von Metriken darstellt, welche aus einem Rohdaten-Piktogramm verfügbar sind.

4. Vorrichtung nach Anspruch 1, ferner umfassend die Bestimmung einer Gesundheit des Systems (102) basierend auf Differenzen zwischen dem Basislinien-Piktogrammstapel und dem Echtzeit-Piktogramm.

5. Vorrichtung nach Anspruch 1, wobei die Vielzahl von Metriken, welche dem System (102) zugeordnet sind, aus unterschiedlichen Quellen zum System (102) stammt.

6. Vorrichtung nach Anspruch 1, wobei ein Wahrscheinlichkeitsbestimmungsmechanismus die mindestens zwei Metriken identifiziert, welche eine relationale Signifikanz aufweisen.

7. Vorrichtung nach Anspruch 1, ferner umfassend Programmanweisungen, welche, wenn sie ausgeführt werden, den Prozessor (1202) veranlassen, mit einer Abhilfemaßnahme in Reaktion auf das Problem zu reagieren.

8. Vorrichtung nach Anspruch 7, ferner umfassend Programmanweisungen, welche, wenn sie ausgeführt werden, den Prozessor (1202) veranlassen, zu bestimmen, ob das System (102) neue Basislinien-Metriken in Reaktion auf die Abhilfemaßnahme aufweist.

9. Vorrichtung nach Anspruch 8, ferner umfassend Programmanweisungen, welche, wenn sie ausgeführt werden, den Prozessor (1202) veranlassen, den Basislinien-Piktogrammstapel in Reaktion auf die Bestimmung der Tatsache, dass das System (102) neue Basislinien-Metriken in Reaktion auf die Abhilfemaßnahme aufweist, zu aktualisieren.

10. Computerprogrammprodukt zum Analysieren von Daten mit Computeranzeige, Folgendes umfassend:
ein greifbares, computerlesbares Speichermedium (1204), wobei das greifbare, computerlesbare Speichermedium (1204) einen computerlesbaren Programmcode umfasst, welcher damit verkörpert ist, wobei der computerlesbare Programmcode einen Code umfasst, welcher, wenn er ausgeführt wird, einen Prozessor (1202) veranlasst zum:
Erzeugen einer Reihe von korrelierten Piktogrammen, wobei jedes Piktogramm in der Reihe von korrelierten Piktogrammen erzeugt wird durch:
Empfangen einer Vielzahl von Metriken, welche einem System (102) zugeordnet ist;
Erzeugen eines Rohdaten-Piktogramms, welches schematisch die Vielzahl von Metriken darstellt;
Identifizieren, aus der Vielzahl von Metriken, mindestens zweier Metriken, welche eine relationale Signifikanz aufweisen, wobei die mindestens zwei Metriken eine relationale Signifikanz aufweisen, wenn eine mathematische Beziehung, welche einen Wahrscheinlichkeitsbeziehungs-Schwellenwert überschreitet, zwischen den mindestens zwei Metriken existiert; und
Erzeugen eines korrelierten Piktogramms, welches die mindestens zwei Metriken umfasst;
Analysieren, unter Verwendung von Computeranzeige, der Reihe von korrelierten Piktogrammen zum Bestimmen einer mathematischen Beziehung der Metriken;
Erzeugen eines Basislinien-Piktogrammstapels, welcher die Reihe von korrelierten Piktogrammen basierend auf der mathematischen Beziehung umfasst, wobei:
jedes korrelierte Piktogramm System-Metriken zu einem spezifischen Zeitpunkt darstellt; und
der Basislinien-Piktogrammstapel anzeigt, wie die mindestens zwei Metriken sich aufeinander unter annehmbaren Betriebsbedingungen beziehen;
Erzielen einer Vielzahl von Echtzeit-Metriken, welche dem System (102) zugeordnet sind;
Erzeugen eines Echtzeit-Piktogramms, welches schematisch die Echtzeit-Metriken, welche dem System (102) zugeordnet sind, darstellt;
Vergleichen, unter Verwendung von Computeranzeige, des Basislinien-Piktogrammstapels mit dem Echtzeit-Piktogramm um zu bestimmen, ob die Echtzeit-Metriken innerhalb annehmbarer Betriebsparameter liegen; und
Benachrichtigen des Systems (102), dass ein Problem vorliegt, wenn die Echtzeit-Metriken nicht innerhalb annehmbarer Betriebsparameter liegen.

11. Computerimplementiertes Verfahren zum Analysieren von Daten mit Computeranzeige, Folgendes umfassend:
Erzeugen einer Reihe von korrelierten Piktogrammen, wobei jedes Piktogramm in der Reihe von korrelierten Piktogrammen erzeugt wird durch:
Empfangen einer Vielzahl von Metriken, welche einem System (102) zugeordnet ist;
Erzeugen eines Rohdaten-Piktogramms, welches schematisch die Vielzahl von Metriken darstellt;
Identifizieren, aus der Vielzahl von Metriken, mindestens zweier Metriken, welche eine relationale Signifikanz aufweisen, wobei die mindestens zwei Metriken eine relationale Signifikanz aufweisen, wenn eine mathematische Beziehung, welche einen Wahrscheinlichkeitsbeziehungs-Schwellenwert überschreitet, zwischen den mindestens zwei Metriken existiert; und
Erzeugen eines korrelierten Piktogramms, welches die mindestens zwei Metriken umfasst;
Analysieren, unter Verwendung von Computeranzeige, der Reihe von korrelierten Piktogrammen (200) zum Bestimmen einer mathematischen Beziehung der Metriken;
Erzeugen eines Basislinien-Piktogrammstapels (500), welcher die Reihe von korrelierten Piktogrammen basierend auf der mathematischen Beziehung umfasst, wobei:
jedes korrelierte Piktogramm System-Metriken zu einem spezifischen Zeitpunkt darstellt; und
der Basislinien-Piktogrammstapel anzeigt, wie die mindestens zwei Metriken sich aufeinander unter annehmbaren Betriebsbedingungen beziehen;
Erzielen einer Vielzahl von Echtzeit-Metriken, welche dem System (102) zugeordnet ist;
Erzeugen eines Echtzeit-Piktogramms, welches schematisch die Echtzeit-Metriken, welche dem System (102) zugeordnet sind, darstellt;
Vergleichen, unter Verwendung von Computeranzeige, des Basislinien-Piktogrammstapels mit dem Echtzeit-Piktogramm um zu bestimmen, ob die Echtzeit-Metriken innerhalb annehmbarer Betriebsparameter liegen; und
Benachrichtigen des Systems (102), dass ein Problem vorliegt, wenn die Echtzeit-Metriken nicht innerhalb annehmbarer Betriebsparameter liegen.

## Revendications

1. Dispositif pour analyser des données avec une visualisation par ordinateur, comprenant :
un processeur (1202) et une mémoire (1204), ladite mémoire (1204) comprenant des instructions de programme qui, lorsqu'elles sont exécutées, forcent le processeur (1202) à :
créer une série de pictogrammes corrélés, dans lequel chaque pictogramme dans la série de pictogrammes corrélés est généré en :
recevant une pluralité de métriques qui sont associées à un système (102) ;
générant un pictogramme de données brutes qui représente schématiquement la pluralité de métriques ;
identifiant, parmi la pluralité de métriques, au moins deux métriques qui présentent une signifiance relationnelle, dans lequel les au moins deux métriques présentent une signifiance relationnelle lorsqu'une relation mathématique qui excède un seuil de relation de probabilité existe entre les au moins deux métriques ; et en
créant un pictogramme corrélé qui comprend les au moins deux métriques ;
analyser, en utilisant une visualisation par ordinateur, la série de pictogrammes corrélés (200) pour déterminer une relation mathématique des métriques ;
créer une pile de pictogrammes de ligne de base (500) qui comprend la série de pictogrammes corrélés sur la base de la relation mathématique, dans lequel :
chaque pictogramme corrélé représente des métriques système à un instant temporel spécifique ; et
la pile de pictogrammes de ligne de base indique comment les au moins deux métriques sont rapportées les unes aux autres pendant des conditions de fonctionnement acceptables ;
obtenir une pluralité de métriques en temps réel qui sont associées au système (102) ;
créer un pictogramme en temps réel qui représente schématiquement les métriques en temps réel qui sont associées audit système (102) ;
comparer, en utilisant une visualisation par ordinateur, ladite pile de pictogrammes de ligne de base avec ledit pictogramme en temps réel pour déterminer si oui ou non les métriques en temps réel sont à l'intérieur de paramètres de fonctionnement acceptables ; et
notifier au système (102) qu'il y a un problème si les métriques en temps réel ne sont pas à l'intérieur de paramètres de fonctionnement acceptables.

2. Dispositif selon la revendication 1, dans lequel lesdites instructions de programme forcent ledit processeur (1202) à comparer un pictogramme corrélé de ladite pile de pictogrammes de ligne de base avec ledit pictogramme en temps réel qui représente un instant temporel identique tout comme ledit pictogramme corrélé.

3. Dispositif selon la revendication 1, dans lequel ladite pile de pictogrammes de ligne de base (500) représente un sous-jeu de métriques qui sont disponibles à partir d'un pictogramme de données brutes.

4. Dispositif selon la revendication 1, comprenant en outre la détermination d'un état dudit système (102) sur la base de différences entre ladite pile de pictogrammes de ligne de base et ledit pictogramme en temps réel.

5. Dispositif selon la revendication 1, dans lequel la pluralité de métriques qui sont associées au système (102) proviennent de différentes sources sur le système (102).

6. Dispositif selon la revendication 1, dans lequel un mécanisme de détermination de probabilité identifie les au moins deux métriques qui présentent une signifiance relationnelle.

7. Dispositif selon la revendication 1, comprenant en outre des instructions de programme qui, lorsqu'elles sont exécutées, forcent le processeur (1202) à répondre par une action de remède en réponse au problème.

8. Dispositif selon la revendication 7, comprenant en outre des instructions de programme qui, lorsqu'elles sont exécutées, forcent le processeur (1202) à déterminer si oui ou non le système (102) présente de nouvelles métriques de ligne de base en réponse à l'action de remède.

9. Dispositif selon la revendication 8, comprenant en outre des instructions de programme qui, lorsqu'elles sont exécutées, forcent le processeur (1202) à mettre à jour la pile de pictogrammes de ligne de base en réponse à la détermination du fait que le système (102) présente de nouvelles métriques de ligne de base en réponse à l'action de remède.

10. Progiciel pour analyser des données avec une visualisation par ordinateur, comprenant :
un support de stockage tangible pouvant être lu par ordinateur (1204), ledit support de stockage tangible pouvant être lu par ordinateur (1204) comprenant un code de programme pouvant être lu par ordinateur qui est intégré en son sein, ledit code de programme pouvant être lu par ordinateur comprenant un code qui, lorsqu'il est exécuté, force un processeur (1202) à :
créer une série de pictogrammes corrélés, dans lequel chaque pictogramme dans la série de pictogrammes corrélés est généré en :
recevant une pluralité de métriques qui sont associées à un système (102) ;
générant un pictogramme de données brutes qui représente schématiquement la pluralité de métriques ;
identifiant, parmi la pluralité de métriques, au moins deux métriques qui présentent une signifiance relationnelle, dans lequel les au moins deux métriques présentent une signifiance relationnelle lorsqu'une relation mathématique qui excède un seuil de relation de probabilité existe entre les au moins deux métriques ; et en
créant un pictogramme corrélé qui comprend les au moins deux métriques ;
analyser, en utilisant une visualisation par ordinateur, la série de pictogrammes corrélés pour déterminer une relation mathématique des métriques ;
créer une pile de pictogrammes de ligne de base qui comprend la série de pictogrammes corrélés sur la base de la relation mathématique, dans lequel :
chaque pictogramme corrélé représente des métriques système à un instant temporel spécifique ; et
la pile de pictogrammes de ligne de base indique comment les au moins deux métriques sont rapportées les unes aux autres pendant des conditions de fonctionnement acceptables ;
obtenir une pluralité de métriques en temps réel qui sont associées au système (102) ;
créer un pictogramme en temps réel qui représente schématiquement les métriques en temps réel qui sont associées audit système (102) ;
comparer, en utilisant une visualisation par ordinateur, ladite pile de pictogrammes de ligne de base avec ledit pictogramme en temps réel pour déterminer si oui ou non les métriques en temps réel sont à l'intérieur de paramètres de fonctionnement acceptables ; et
notifier au système (102) qu'il y a un problème si les métriques en temps réel ne sont pas à l'intérieur de paramètres de fonctionnement acceptables.

11. Procédé mis en œuvre par ordinateur pour analyser des données avec une visualisation par ordinateur, comprenant :
la création d'une série de pictogrammes corrélés, dans lequel chaque pictogramme dans la série de pictogrammes corrélés est généré en :
recevant une pluralité de métriques qui sont associées à un système (102) ;
générant un pictogramme de données brutes qui représente schématiquement la pluralité de métriques ;
identifiant, parmi la pluralité de métriques, au moins deux métriques qui présentent une signifiance relationnelle, dans lequel les au moins deux métriques présentent une signifiance relationnelle lorsqu'une relation mathématique qui excède un seuil de relation de probabilité existe entre les au moins deux métriques ; et en
créant un pictogramme corrélé qui comprend les au moins deux métriques ;
l'analyse, en utilisant une visualisation par ordinateur, de la série de pictogrammes corrélés (200) pour déterminer une relation mathématique des métriques ;
la création d'une pile de pictogrammes de ligne de base (500) qui comprend la série de pictogrammes corrélés sur la base de la relation mathématique, dans lequel :
chaque pictogramme corrélé représente des métriques système à un instant temporel spécifique ; et
la pile de pictogrammes de ligne de base indique comment les au moins deux métriques sont rapportées les unes aux autres pendant des conditions de fonctionnement acceptables ;
l'obtention d'une pluralité de métriques en temps réel qui sont associées au système (102) ;
la création d'un pictogramme en temps réel qui représente schématiquement les métriques en temps réel qui sont associées audit système (102) ;
la comparaison, en utilisant une visualisation par ordinateur, de ladite pile de pictogrammes de ligne de base avec ledit pictogramme en temps réel pour déterminer si oui ou non les métriques en temps réel sont à l'intérieur de paramètres de fonctionnement acceptables ; et
la notification au système (102) qu'il y a un problème si les métriques en temps réel ne sont pas à l'intérieur de paramètres de fonctionnement acceptables.
